# EUROPÄISCHE PATENTSCHRIFT

(11) **EP 1 527 291 B1**
(45) Veröffentlichungstag und Bekanntmachung des Hinweises auf die Patenterteilung: **19.04.2006**
(21) Anmeldenummer: 03790871.2
(22) Anmeldetag: 07.08.2003
(51) Int. Cl.: F16H 37/02, F16H 55/30, F16H 57/05, B60K 17/08

(54) **AUTOMATGETRIEBE**
AUTOMATIC GEARBOX
TRANSMISSION AUTOMATIQUE

(30) Priorität: 09.08.2002 DE 10236607
(43) Veröffentlichungstag der Anmeldung: 04.05.2005
(73) Patentinhaber: ZF FRIEDRICHSHAFEN AG, 88038 Friedrichshafen (DE)
(72) Erfinder: TIESLER, Peter, 88074 Meckenbeuren (DE)
(86) Internationale Anmeldenummer: PCT/EP2003/008733
(87) Internationale Veröffentlichungsnummer: WO 2004/020873

(56) Entgegenhaltungen:
- DE-A- 19 932 613
- US-A- 3 446 095
- US-A- 3 491 621
- US-A- 5 743 824

## Beschreibung

Die Erfindung betrifft ein Automatgetriebe, insbesondere für ein Kraftfahrzeug, mit einer Antriebswelle, mit einer zur Antriebswelle nicht koaxialen Abtriebswelle, mit einem zur Antriebswelle koaxialen Planetengetriebe, das mindestens einen Planetenradsatz und mindestens ein Schaltelement aufweist zur selektiven Übertragung einer Antriebsdrehzahl der Antriebswelle auf ein Ausgangselement des Planetengetriebes, sowie mit einem in axialer Richtung unmittelbar an eine Getriebegehäusewand des Automatgetriebes angrenzenden Kettentrieb konstanter Übersetzung, dessen Antriebsrad mit dem Ausgangselement des Planetengetriebes verbunden und koaxial zur Antriebswelle angeordnet ist, und dessen Abtriebsrad über eine Konstantübersetzung mit der Abtriebswelle wirkverbunden ist.

Ein gattungsgemäßes Automatgetriebe ist aus der US 4,938,097 bekannt. Dieses 4-Gang-Automatgetriebe für ein Kraftfahrzeug ist in Transaxle-Bauweise ausgeführt und umfaßt einen Drehmomentwandler als Anfahrelement und ein koaxial zum Drehmomentwandler angeordnetes Planetengetriebe. Eine Turbinenwelle des Drehmomentwandlers bildet die Antriebswelle des Planetengetriebes. Das Planetengetriebe weist zwei Planetenradsätze, vier naßlaufende Kupplungen, zwei naßlaufende Bremsen und zwei Freiläufe auf. Durch selektives Schließen der Schaltelemente ist eine Getriebeeingangsdrehzahl auf ein Hohlrad des dritten Planetenradsatzes als Ausgangselement des Planetengetriebes übertragbar. Der zweite Planetenradsatz grenzt unmittelbar an eine Getriebegehäusewand an, auf deren dem zweiten Planetenradsatz abgewandten Seite der Drehmomentwandler angrenzt. Das Hohlrad des zweiten Planetenradsatzes ist gleichzeitig als Antriebsrad eines Kettentriebs ausgebildet und auf einer dem Drehmomentwandler zugeordneten Leitradwelle gelagert. Ein Abtriebsrad des Kettentriebs ist achsparallel zum zweiten Planetenradsatz angeordnet und überträgt eine Ausgangsdrehzahl des Planetengetriebes auf ein Sonnenrad eines nachgeschalteten Abtriebsplanetenradsatzes. Das Hohlrad des Abtriebsplanetenradsatzes ist an dem Getriebegehäuse festgesetzt. Ein Planetenträger des Abtriebsplanetenradsatzes ist über ein Differential mit einer achsparallel zur Antriebswelle verlaufenden Abtriebswelle des Automatgetriebes verbunden. Da sich der Kettentrieb in radialer Richtung gesehen axial oberhalb des zweiten Planetenradsatz erstreckt, ergibt sich eine für ein 4-Gang-Automatgetriebes kompakte Bauform des mit geringem axialen Bauraumbedarf im Kraftfahrzeug.

Die US 5,261,862 offenbart eine Weiterentwicklung des in der US 4,938,097 beschriebenen 4-Gang-Automatgetriebes als 5-Gang-Automatgetriebe. Dieses Kraftfahrzeug-Getriebe in Transaxle-Bauweise umfaßt unverändert einen Drehmomentwandler als Anfahrelement und ein koaxial zum Drehmomentwandler angeordnetes Planetengetriebe. Gegenüber der US 4,938,097 ist das Planetengetriebe nunmehr um einen dritten Planetenradsatz, zwei weitere naßlaufende Bremsen und einen dritten Freilauf erweitert. Der dritte Planetenradsatz ist auf der dem Drehmomentwandler abgewandten Seite des Getriebes angeordnet und arbeitet als Overdrive-Übersetzung. Das Hohlrad des zweiten Planetenradsatzes bildet unverändert das Ausgangselement des Planetengetriebes und ist gleichzeitig als Antriebsrad des Kettentriebs ausgebildet, der mit der zum Drehmomentwandler achsparallel verlaufenden Abtriebswelle des Getriebes wirkverbunden ist. Gegenüber der US 4,938,097 ist der axiale Bauraumbedarf des 5-Gang-Automatgetriebes durch die zusätzliche, koaxial zur Antriebswelle angeordnete Overdrive-Baugruppe deutlich größer.

Aus der DE 199 32 613 A1 ist ein 6-Gang-Automatgetriebe bekannt, bei dem ein koaxial zu einer Antriebswelle des Automatgetriebes angeordnetes Planetengetriebe ein als Reduziergetriebe arbeitenden Vorschalt-Planetenradsatz, einen als Ravigneaux-Radsatz ausgebildeten mehrgliedrigen Haupt-Planetenradsatz, drei naßlaufende Kupplungen und zwei naßlaufende Bremsen aufweist. Durch selektives Schließen der Schaltelemente ist eine Antriebsdrehzahl der Antriebswelle auf ein Ausgangselement des Planetengetriebes übertragbar. Das Ausgangselement des Planetengetriebes ist als Hohlrad des Haupt-Planetenradsatzes ausgebildet und mit einem ersten Stirnrad einer vierrädrigen Stirnradstufe verbunden. Das abtriebsseitige vierte Stirnrad der Stirnradstufe ist über ein Differential mit einer achsparallel zur Antriebswelle verlaufenden Abtriebswelle des Automatgetriebes verbunden. Die Stirnradstufe ist räumlich gesehen axial zwischen einem Antriebsmotor des Automatgetriebes und dem Planetengetriebe angeordnet und grenzt einerseits unmittelbar an eine Kupplung und andererseits unmittelbar an eine dem Antriebsmotor zugewandten Getriebegehäusewand an. Aufgrund des besonderen Radsatzkonzeptes und des Ersatzes eines Drehmomentwandlers durch ein getriebeinternes Schaltelement als Anfahrelement ist der axiale Bauraumbedarf dieses 6-Gang-Automatgetriebes vergleichbar mit dem axialen Bauraumbedarf des zuvor beschriebenen 4-Gang-Automatgetriebes.

Der Erfindung liegt die Aufgabe zugrunde, ein Automatgetriebe mit nicht-koaxialer An- und Abtriebswelle der eingangs beschriebenen Art zu schaffen, bei dem der axiale Bauraumbedarf minimiert wird. Gelöst wird die Aufgabe durch ein die Merkmale des Hauptanspruchs aufweisendes Automatgetriebe. Vorteilhafte Ausgestaltungen und Weiterbildungen ergeben sich aus den Unteransprüchen.

Ausgehend vom eingangs beschriebenen Stand der Technik umfaßt das erfindungsgemäße Automatgetriebe eine Antriebswelle, eine zur Antriebswelle nicht koaxiale Abtriebswelle, ein zur Antriebswelle koaxial angeordnetes Planetengetriebe, sowie einen Kettentrieb konstanter Übersetzung, dessen Antriebsrad mit einem Ausgangselement des Planetengetriebes verbunden und koaxial zur Antriebswelle angeordnet ist, und dessen Abtriebsrad über eine Konstantübersetzung mit der Abtriebswelle wirkverbunden ist. Das Planetengetriebe weist mindestens einen Planetenradsatz und mindestens ein Schaltelement auf zur selektiven Übertragung einer Antriebsdrehzahl der Antriebswelle auf das Ausgangselement des Planetengetriebes. Das Planetengetriebe erzeugt also eine variable Übersetzung der Antriebsdrehzahl des Automatgetriebes, aus der über die Konstantübersetzung zwischen Kettentrieb-Antriebsrad und Abtriebswelle die Abtriebsübersetzung des Automatgetriebes erzeugt wird.

Ähnlich dem Stand der Technik kann das Ausgangselement des Planetengetriebes als Hohlrad ausgebildet sein. Im Unterschied zum gattungsgemäßen Stand der Technik ist das Hohlrad jedoch vorzugsweise über eine formschlüssige Mitnahmeverzahnung mit dem Antriebsrad des Kettentriebs verbunden. Hierdurch ergibt sich eine verbesserte Geräuschabkoppelung des Kettentriebs von dem Planetengetriebe.

Der Kettentrieb grenzt in axialer Richtung unmittelbar an eine Getriebegehäusewand des Automatgetriebes an. Erfindungsgemäß übergreift das Antriebsrad des Kettentriebs ein axial auf seiner der Getriebegehäusewand abgewandten Seite unmittelbar angrenzendes Schaltelement in axialer Richtung radial zumindest teilweise.

Gegenüber dem gattungsgemäßen Stand der Technik ist der Kettentrieb also räumlich gesehen axial direkt zwischen der Getriebegehäusewand und einem Schaltelement des Planetengetriebes angeordnet. Die Getriebegehäusewand ist beispielsweise einem Antriebsmotor des Automatgetriebes zugewandt. Durch die besondere Ausgestaltung des Kettentrieb-Antriebsrades wird eine besonders bauraumsparende axiale Verschachtelung der Bauelemente des koaxial zur Antriebswelle des Automatgetriebes angeordneten Planetengetriebes erzielt und damit ein axial kurz bauendes Automatgetriebe. Die Breite des Kettentriebs wird bestimmt durch das Ausgangsdrehmoment des Planetengetriebes, das gegenüber dem Ausgangsdrehmoment des Planetengetriebes deutlich größere Abtriebsdrehmoment des Automatgetriebes wird primär erst durch die in Kraftflußrichtung gesehen hinter dem Kettentrieb angeordnete Konstantübersetzung erzeugt. Wird beispielsweise die Stirnradstufe des in der DE 199 32 613 A1 offenbarten 6-Gang-Automatgetriebes durch den erfindungsgemäßen Kettentrieb und einen dem Kettentrieb nachgeschalteten Planetenradsatz zur Erzeugung der Konstantübersetzung ersetzt, so kann die axiale Baulänge des Automatgetriebes um etwa die halbe Breite des koaxial zur Antriebswelle angeordneten schrägverzahnten Stirnrades verringert werden, insbesondere weil die Lagerung des Kettentrieb-Antriebsrades im Vergleich zur Stirnradlagerung auf nur geringe Axilakräfte ausgelegt werden muß.

Bevorzugt wird das erfindungsgemäße Automatgetriebe als Kraftfahrzeuggetriebe für einen Antriebsstrang mit quer zur Fahrtrichtung angeordnetem Antriebsmotor eingesetzt, einem Anwendungsfall mit konzeptbedingt geringem Angebot an axialem Bauraum für ein in Motorlängsrichtung gesehen hinter dem Motor angeflanschtes Getriebe.

In einer vorteilhaften Ausgestaltung der Erfindung wird vorgeschlagen, daß das Antriebsrad des Kettentriebs in axialer Richtung unmittelbar an einen Lamellenträger des Schaltelementes, insbesondere an einen als Kupplungszylinder ausgebildeten Außenlamellenträger angrenzt, wobei eine Servoeinrichtung dieses Schaltelementes auf der dem Antriebsrad des Kettentriebs zugewandten Seite des Schaltelementes angeordnet ist. Das Antriebsrad des Kettentriebs kann die Lamellen dieses Schaltelementes zumindest teilweise in axialer Richtung radial übergreifen. Das Schaltelement kann dabei sowohl als Kupplung als auch als Bremse ausgebildet sein.

In einer weiteren Ausgestaltung der Erfindung wird vorgeschlagen, daß das Antriebsrad des Kettentriebs auf einem sich axial in Richtung des Kettentriebs erstreckenden Gehäusevorsprung der Getriebegehäusewand gelagert ist. Alternativ kann das Antriebsrad des Kettentriebs auch auf einer fest mit einem Getriebegehäuse verbundenen Welle gelagert sein. Eine derartige gehäusefeste Welle kann beispielsweise eine Leitradwelle eines als Anfahrelement des Automatgetriebes vorgesehenen hydrodynamischen Drehmomentwandlers sein. In vorteilhafter Weise kann die Lagerung als bauraumsparende Axial-/Radial-Nadellagerung ausgeführt sein, da bei der Auslegung hinsichtlich Radiallast weitgehend nur die Zugkräfte der geradverzahnten Kettenräder berücksichtigt werden müssen und sich axiale Stützkräfte weitgehend lediglich aus dem Axialschub des Ausgangselementes des Planetengetiebes - also beispielsweise aus einer Schrägverzahnung des Hohlrades - ergeben. Das System ist zumindest weitgehend frei von Kippkräften, die beispielsweise durch eine Schrägverzahnung entstehen. Der Verzicht auf eine übliche vorgespannte Kegelrollenlagereinheit wirkt sich nicht nur positiv aus auf den axialen Bauraumbedarf, sondern auch auf den Wirkungsgrad des Automatgetriebes.

Durch eine Zentrierung von Antriebsrad und Abtriebsrad des Kettentriebs in einem gemeinsamen GetriebegehäuseElement, das beispielsweise als Getriebegehäusewand oder Wandlerglocke ausgeführt ist, kann ein Alignment-Fehler des Kettentriebs minimiert werden.

Zur Schmierung des Kettentriebs kann ein separates Spritzrohr vorgesehen sein, über das Schmiermittel von innen auf den Innendurchmesser der Kette gespritzt wird. Anstelle des Schmierrohres kann auch mindestens eine entsprechend dimensionierte Bohrung oder Blende direkt in der Leitradwelle bzw. in dem Gehäusevorsprung, auf dem das Antriebsrad des Kettentrieb gelagert ist, integriert sein und das Schmiermittel von dort der Ketteninnenseite zugeführt werden.

In einer Weiterbildung der Erfindung, insbesondere in Verbindung mit einer motornahen Anordnung des Kettentriebs, ist eine Ölpumpe zur Schmiermittelversorgung des Automatgetriebes direkt in die (motornahe) Getriebegehäusewand, an der das Antriebsrad des Kettentriebs gelagert ist, integriert. Alternativ hierzu kann die Ölpumpe auch in der Welle - insbesondere der Leitradwelle - an der das Antriebsrad des Kettentriebs gelagert ist, integriert sein. Hierdurch ergibt sich im Pumpenbereich ein sehr kompakter, baulängensparender Aufbau des Automatgetriebes.

Ähnlich dem Stand der Technik kann das Abtriebsrad des Kettentriebs mit einem Eingangselement eines Abtriebsplanetenradsatzes verbunden sein, der zusammen mit der konstanten Übersetzung der Kettentriebs aus der Ausgangsdrehzahl des Planetengetriebes die Abtriebsdrehzahl der Abtriebswelle erzeugt. Vorzugsweise bildet dabei ein Sonnenrad das Eingangselement und ein Steg ein Ausgangselement des Abtriebsplanetenradsatzes, wobei ein Hohlrad getriebegehäusefest ausgeführt ist. Insbesondere bei einem Kraftfahrzeug-Automatgetriebe mit quer zur Fahrtrichtung angeordneter Motor-Getriebe-Einheit kann ein herkömmliches Differential in Kraftflußrichtung gesehen zwischen dem Ausgangselement des Abtriebsplanetenradsatzes und der Abtriebswelle des Automatgetriebes vorgesehen sein.

Anhand der folgenden Figuren, in denen beispielhafte ausgeführte Konstruktionen dargestellt sind, wird die Erfindung näher erläutert. In allen Figuren sind vergleichbare Bauelemente auch mit den gleichen Bezugszeichen versehen.
Es zeigen:
- Fig. 1: einen auszugsweisen Getriebeschnitt einer ersten Konstruktion mit einem erfindungsgemäßen Kettentrieb,
- Fig. 2: einen auszugsweisen Getriebeschnitt einer zweiten Konstruktion mit einem erfindungsgemäßen Kettentriebs-Antriebsrad und
- Fig. 3: eine Schnittdarstellung einer dritten Konstruktion mit einem erfindungsgemäßen Kettentriebs-Antriebsrad.

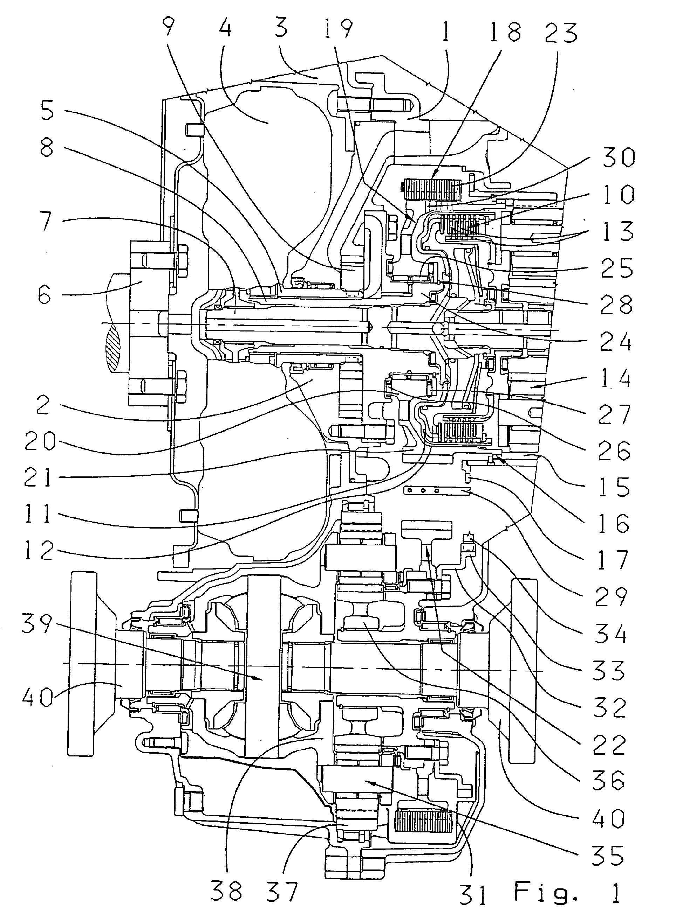

Die erste beispielhafte Konstruktion mit einem erfindungsgemäßen Kettentrieb gemäß Fig. 1 betrifft ein Automatgetriebe für ein Kraftfahrzeug mit quer zur Fahrtrichtung eingebauter Motor-Getriebe-Einheit. Ein Getriebegehäuse 1 weist auf einer Seite, die einem nicht näher dargestellten Antriebsmotor zugewandt ist, eine Getriebegehäusewand 2 auf. In dem dargestellten Beispiel bildet die Getriebegehäusewand 2 gleichzeitig ein Pumpengehäuse einer Ölpumpe 9. Auf der dem Antriebsmotor zugewandten Seite der Getriebegehäusewand 2 ist ein Drehmomentwandler 4 als Anfahrelement des Automatgetriebes angeordnet. Eine Wandlerglocke 3 umschließt den Drehmomentwandler 4 und ist mit dem Getriebegehäuse 1 verschraubt. Die Getriebegehäusewand 2 ist mit der Wandlerglocke 3 verschraubt. In einer anderen Ausbildung kann die Getriebegehäusewand 2 auch direkt mit dem Getriebegehäuse 1 verschraubt sein oder auch zusammen mit dem Getriebegehäuse 1 einstückig ausgeführt sein. Ein Wandlerhals 5 des Drehmomentwandlers 4 ist in der Getriebegehäusewand 2 gelagert. Der Drehmomentwandler 4 wird von einer Motorwelle 6 des Antriebsmotors angetrieben und treibt ein Antriebswelle 7 des Automatgetriebes an. Eine Leitradwelle 8 stützt den Drehmomentwandler 4 gegenüber dem Getriebegehäuse 1 ab. Hierzu ist die Leitradwelle 8 mit der Getriebegehäusewand 2 verschraubt, wobei sie die Getriebegehäusewand 2 axial durchdringt. Die Antriebswelle 7 verläuft konzentrisch innerhalb der Leitradwelle 8, die wiederum konzentrisch innerhalb des Wandlerhalses 5 verläuft. Über eine entsprechend ausgebildete Mitnahme treibt der Wandlerhals 5 die Ölpumpe 9 zur Schmier- und Druckmittelversorgung des Automatgetriebes an. Die Ölpumpe 9 ist in dem dargestellten Beispiel in der Getriebegehäusewand 2 integriert und zum Innenraum des Getriebegehäuses 1 hin durch einen Flansch der Leitradwelle 8 abgedichtet.

Auf der dem Antriebsmotor bzw. dem Drehmomentwandler 4 abgewandten Seite der Getriebegehäusewand 2, koaxial zur Antriebswelle 7, erstreckt sich innerhalb des Getriebegehäuses 1 ein Planetengetriebe mit mindestens einem Schaltelement 10 und mindestens einem Planetenradsatz 14. Durch selektives Schließen der im einzelnen nicht näher dargestellten Schaltelemente ist eine Antriebsdrehzahl der Antriebswelle 7 vorzugsweise in mehreren Gangstufen auf ein Ausgangselement des Planetengetriebes übertragbar. Im dargestellten Beispiel ist dieses Ausgangselement des Planetengetriebes ein Hohlrad 15 des Planetenradsatzes 14. Das Schaltelement 10 ist auf der Seite des Planetenradsatzes 14 angeordnet, die der Getriebegehäusewand 2 zugewandt ist.

Auf der dem Antriebsmotor bzw. dem Drehmomentwandler 4 abgewandten Seite der Getriebegehäusewand 2, unmittelbar angrenzend an diese, ist ein Kettentrieb 18 angeordnet, über den eine Ausgangsdrehzahl des Planetengetriebes auf eine Abtriebbaugruppe des Automatgetriebes übertragen wird. Die Abtriebsbauguppe umfaßt im wesentlichen einen Abtriebsplanetenradsatz 34, ein Differential 39 und eine hier als zwei Abtriebsflansche 40 ausgebildete Abtriebswelle des Automatgetriebes. Die Übersetzung von Kettentrieb 18 und Abtriebsbaugruppe ist jeweils konstant.

Ein Antriebsrad 19 des Kettentriebs 18 weist einen unmittelbar zur Getriebegehäusewand 2 benachbarten scheibenförmigen Abschnitt 20 auf, der in dem dargestellten Beispiel auf einem Lagerabschnitt 24 der Leitradwelle 8 gelagert ist, also indirekt an der Getriebegehäusewand 2. Hierzu erstreckt sich der Lagerabschnitt 24 der Leitradwelle 8 axial in den Innenraum des Getriebegehäuses 1 in Richtung Schaltelement 10 bzw. Planetenradsatz 14, also in zum Antriebsmotor entgegengesetzer Richtung. Im dargestellten Beispiel umfaßt die Lagerung des Kettentrieb-Antriebsrades 19 ein Radiallager 25, ein gehäusewandseitiges Axiallager 26 und ein schaltelementseitiges Axiallager 27. Dabei sind das Radiallager 25 und das schaltelementseitige Axiallager 27 durch einen Sicherungsring 28 auf dem Lagerabschnitt 24 der Leitradwelle 8 axial fixiert. Diese einfache Axialsicherung der Lagereinheit ist möglich, da insgesamt nur geringe Axialkräfte aus dem Axialschub des Hohlrades 15, welches - wie später im Detail noch erläutert wird - mit dem Antriebsrad 19 verbunden ist, wirken und die Leitradwelle 8 gehäusefest ist. Zur Schmierung des Radiallagers 25 weist der Lagerabschnitt 24 der Leitradwelle 8 in einfacher Weise eine radiale Schmierbohrung auf, über die das Schmiermittel von innen etwa zur Lagermitte des Radiallagers 25 gefördert wird. In einer anderen Ausbildung der Lagereinheit kann auch das schaltelementseitige Axiallager 27 axial auf dem Lagerabschnitt 24 der Leitradwelle 8 fixiert sein, beispielsweise kann auch ein kombiniertes Axial/Radial-Lager vorgesehen sein. Gegenüber einer Kegelrollenlagerung eines schrägverzahnten Stirnrades ist der axiale Bauraumbedarf der beschriebenen Lagerung des Kettentrieb-Antriebsrades 19 in vorteilhafter Weise erheblich verringert, da der Kettentrieb 18 im Gegensatz zum schrägverzahnten Stirntrieb zumindest weitgehend frei von Kippmomenten ist und die Axiallager 26, 27 als entsprechend klein dimensionierte Nadellager ausgeführt sein können. Zudem ist der Wirkungsgrad der Nadellagerung gegenüber einer vorgespannten Kegelrollenlagerung besser.

In einer anderen Ausgestaltung kann das Antriebsrad 19 des Kettentriebs 18 auch auf einem Gehäusevorsprung der Getriebegehäusewand 2, der sich axial in den Innenraum des Getriebegehäuses 1 erstreckt, gelagert sein.

In einer Weiterbildung der Lagerung des Kettentrieb-Antriebsrades 19 wird vorgeschlagen, nur das Radiallager 25 axial direkt auf dem Lagerabschnitt 24 der Leitradwelle 8 zu fixieren, beispielsweise durch den Sicherungsring 28, wohingegen das Antriebsrad 19 des Kettentriebs 18 axial durch an das Antriebsrad 19 angrenzende Getriebebauteile zum Getriebegehäuse 1 hin fixiert ist. Dadurch ist das Antriebsrad 19 axial zwischen Getriebegehäusewand 2 (drehmomentwandlerseitig) und Getriebegehäuse 1 (drehmomentwandlerabgewandt) "schwimmend" gelagert. In diesem Fall kann das schaltelementseitige Axiallager 27 beispielsweise unmittelbar an einen flanschförmigen Abschnitt der Antriebswelle 7 bzw. unmittelbar an den Außenlamellenträger 11 des Schaltelementes 10 angrenzen. Durch eine solche Lageranordnung kann in vorteilhafter Weise ein Axiallager eingespart und hierdurch die axiale Baulänge des Automatgetriebes weiter reduziert werden.

Selbstverständlich können Radial- und Axiallager 25, 26, 27 sowohl als Nadellager als auch als Rollen- oder Kugellager ausgebildet sein.

Auf seiner der Getriebegehäusewand 2 abgewandten Seite grenzt das Antriebsrad 19 des Kettentriebs 18 in axialer Richtung unmittelbar an das Schaltelement 10 an, das im dargestellten Beispiel als Kupplung ausgebildet ist. Zur Realisierung einer möglichst baulängensparenden Bauweise ist das Antriebsrad 19 des Kettentriebs 18 zylinderförmig ausgebildet, wobei sich ein zylindrischer Abschnitt 21 des Antriebsrades 19 an den Außendurchmesser des scheibenförmigen Abschnitts 20 des Antriebsrades 19 anschließt und sich axial in den Innenraum des Getriebegehäuses 1 in Richtung des Planetenradsatzes 14 erstreckt. Dabei übergreift der zylindrische Abschnitt 21 des Kettentrieb-Antriebsrades 19 das Schaltelement 10 in axialer Richtung radial. Eine Kette 23 des Kettentriebs 18 verläuft in axialer Richtung gesehen radial teilweise oberhalb der Radial-Lagerung des Kettentrieb-Antriebsrades 19 auf dem Lagerabschnitt 24 der Leitradwelle 8 und in axialer Richtung gesehen radial teilweise oberhalb des Schaltelementes 10. Im dargestellten Beispiel ist das Schaltelement 10 vollständig innerhalb eines zylinderförmigen Abschnitts 21 des Kettentrieb-Antriebsrades 19 angeordnet, wobei ein beispielhaft als Kupplungszylinder ausgebildeter Lamellenträger 11 des Schaltelementes 10 unmittelbar an das Kettentrieb-Antriebsrades 19 angrenzt und eine Servoeinrichtung 12 des Schaltelementes 10 zur Betätigung dessen Lamellen 13 auf der der Getriebegehäusewand 2 zugewandten Seite des Schaltelementes 10 angeordnet ist. Auf der der Getriebegehäusewand 2 abgewandten Seite des zylinderförmigen Abschnitts 21 ist das Kettentrieb-Antriebsrad 19 über eine Mitnahmeverzahnung 16 mit dem Hohlrad 15 des Planeten-trägers 14 formschlüssig verbunden. Diese Mitnahmeverzahnung 16 kann beispielsweise durch bekannte Maßnahmen hinsichtlich guter Körperschallabkoppelung von Kettentrieb 18 und Planetenradsatz 14 optimiert werden. Eine in dem dargestellten Beispiel mit dem Hohlrad 15 fest verbundene Drehzahlgeberscheibe 17 zur Bestimmung der Ausgangsdrehzahl des Planetengetriebes bzw. der Abtriebsdrehzahl des Automatgetriebes kann in einer anderen Ausgestaltung auch fest mit dem Antriebsrad 19 des Kettentriebs verbunden oder in dieses integriert sein.

Ein Abtriebsrad 22 des Kettentriebs 18 ist mit einem Sonnenrad 36 des Abtriebsplanetenradsatzes 35 verbunden und in dem Getriebegehäuse 1 radial gelagert. Die axiale Lagerung des Kettentrieb-Abtriebsrades 22 erfolgt im dargestellten Beispiel im Verbund mit der axialen Lagerung des Differentials 39, das dem Kettentrieb-Abtriebsrades 22 in Kraftflußrichtung nachgeschaltet ist. Aufgrund der weitgehenden Querkraftfreiheit des Kettentriebs 18 sind bauraumsparende Nadellager vorgesehen. Alternativ sind auch hier andere bekannte Lagerkonzepte einsetzbar, beispielsweise mit kombinierten Axial/Radial-Lagern. Im dargestellten Beispiel sind Sonnenrad 36 und Abtriebsrad 22 mehrstückig ausgeführt und mit einem als separates Bauelement ausgeführten Parksperrenrad 32 verschraubt. Das Parksperrenrad 32 weist eine Parksperrenverzahnung 33 auf, in die eine Parksperrenklinke 34 eingreifen kann zur Verblockung der Abtriebswelle des Automatgetriebes. In einer anderen Ausgestaltung können Sonnenrad 36 und Abtriebsrad 22, Abtriebsrad 22 und Parksperrenrad 32 oder auch alle drei Bauelemente Sonnenrad 36, Abtriebsrad 22 und Parksperrenrad 32 einstückig ausgeführt sein. Ein Hohlrad 37 ist an der Getriebegehäusewand 2 festgesetzt. Ein Steg 38 des Abtriebsplanetenradsatzes 35 bildet dessen Ausgangselement und ist mit dem Differential 39 verbunden, welches wiederum mit den beiden Abtriebsflanschen 40 verbunden ist.

Zur Schmierung der Kette 23 ist im dargestellten Beispiel ein Spritzrohr 29 vorgesehen, das axial in den Kettenlauf der zwischen Antriebsrad 19 und Abtriebsrad 22 des Kettentriebs gespannten Kette 23 eintaucht, wobei Schmiermittel durch mehrere Bohrungen des Spritzrohres 29 auf den Innendurchmesser der Kette 23 gespritzt wird. Zur weiteren Verbesserung der Kettenschmierung sind in dem zylindrischen Abschnitt 21 des Kettentrieb-Antriebsrades 19 im Bereich der Kettenverzahnung mehrere radiale Schmierbohrungen 30 vorgesehen, über die Schleuderöl direkt in den Zahneingriff gefördert wird. Zur Verhinderung einer übermäßigen Ölverschäumung durch die in den Ölsumpf des Automatgetriebes eintauchende Kette 23 ist ein Abschirmblech 31 vorgesehen.

In einer Weiterbildung der Kettenschmierung wird zur Erhöhung der Wirksamkeit der Schleuderölzuführung durch die radialen Schmierbohrungen 30 vorgeschlagen, daß am Innendurchmesser des zylindrischen Abschnittes 21 des Kettentrieb-Antriebsrades 19 auch (mindestens) eine Ringnut vorgesehen ist, in welche die radialen Schmierbohrungen 30 münden. Anstelle oder auch zusätzlich zu der Ringnut am Innendurchmesser des zylindrischen Abschnittes 21 des Kettentrieb-Antriebsrades 19 kann auch an dem Außendurchmesser des Lamellenträgers 11 ein zusätzlicher Ölfangring vorgesehen sein, der das Schleuderöl derart aufstaut, daß ein erhöhter Schmiermittelvolumenstrom durch die radialen Schmierbohrungen 30 erzielt wird. In einer anderen Weiterbildung der Kettenschmierung kann vorgesehen sein, daß die Leitradwelle 8 mindestens eine spezielle Schmierbohrung aufweist, über die Schmiermittel auf die Innenseite der Kette 23 gespritzt wird.

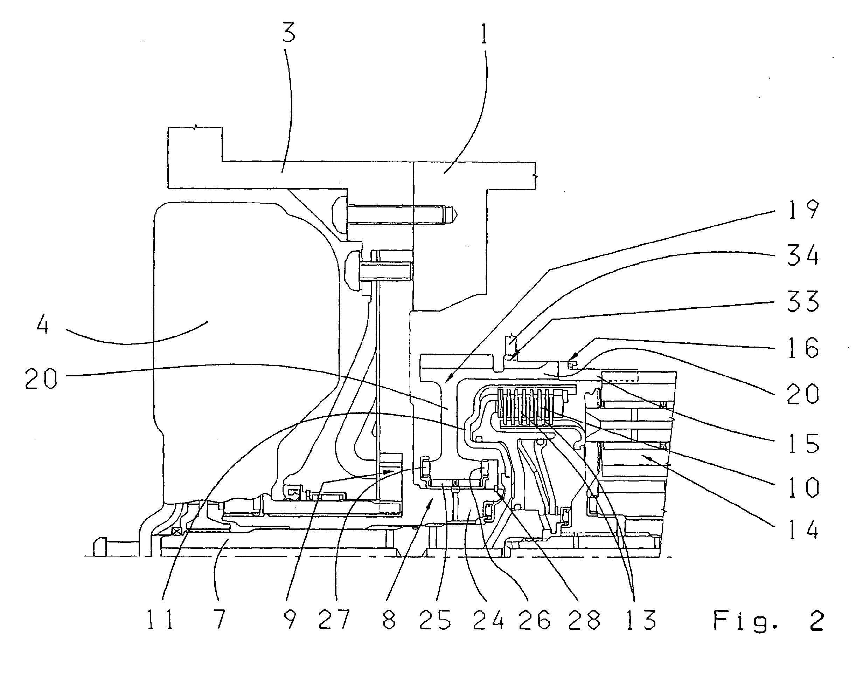

Anhand Fig. 2 wird nun eine zweite beispielhafte Konstruktion mit einem erfindungsgemäßen Kettentrieb-Antriebsrad erläutert. Im Unterschied zu der zuvor detailliert beschriebenen ersten Konstruktion gemäß Fig. 1 bildet die Leitradwelle 8 nunmehr die wandler- bzw. motorseitige Getriebegehäusewand und weist einen entsprechend ausgebildeten scheibenförmigen Abschnitt auf, der über die Wandlerglocke 3 mit dem Getriebegehäuse 1 verschraubt ist. Selbstverständlich kann die Leitradwelle 8 auch direkt mit dem Getriebegehäuse 1 verschraubt sein. Die Ölpumpe 9 ist auf der dem Drehmomentwandler 4 zugewandten Seite der Leitradwelle 8 baulängensparend direkt in die Leitradwelle 8 integriert.

Das Antriebsrad 19 des Kettentriebs ist gegenüber Fig. 1 unverändert im Innenraum des Getriebegehäuses 1 angeordnet und grenzt in axialer Richtung unmittelbar an den scheibenförmigen Abschnitt der Leitradwelle 8 an. Auch gegenüber Fig. 1 unverändert erstreckt sich der zylindrische Lagerabschnitt 24 der Leitradwelle 8 axial in den Innenraum des Getriebegehäuses 1 in Richtung Schaltelement 10 bzw. Planetenradsatz 14. Wie in Fig. 2 ersichtlich, umfaßt die Lagerung des Kettentrieb-Antriebsrades 19 auf dem Lagerabschnitt 24 der Leitradwelle 8 das Radiallager 25, das gehäusewandseitige Axiallager 26 und das schaltelementseitiges Axiallager 27, wobei nunmehr der gesamte Lagerverbund der drei Lager 25, 26, 27 zusammen mit dem Kettentrieb-Antriebsrad 19 über den Sicherungsring 28 auf dem Lagerabschnitt 24 der Leitradwelle 8 axial fixiert ist.

Das Antriebsrad 19 des Kettentriebs ist wiederum als in Richtung Schaltelement 10 bzw. Planetenradsatz 14 hin geöffneter Zylinder ausgebildet, mit scheibenförmigem Abschnitt 20 des Kettentrieb-Antriebsrades 19 und zylindrischem Abschnitt 21. Der scheibenförmige Abschnitt 20 grenzt unmittelbar an den scheibenförmigen Abschnitt der Leitradwelle 8 an. Der zylindrische Abschnitt 21 des Kettentrieb-Antriebsrades 19 übergreift das Schaltelement 10 und ist aus seiner wandler- bzw. motorabgewandten Seite über die Mitnahmeverzahnung 16 mit dem Hohlrad 15 des Planetenradsatzes 14 formschlüssig verbunden. Dabei bildet das Hohlrad 15 wiederum exemplarisch das Ausgangselement des koaxial zur Antriebswelle 7 angeordneten Planetengetriebes. Die nicht näher dargestellte Kette des Kettentriebs verläuft in axialer Richtung gesehen radial oberhalb des scheibenförmigen Abschnitts 20 des Kettentrieb-Antriebsrades 19 und in axialer Richtung gesehen radial zumindest überwiegend oberhalb des Radiallagers 25.

Das Schaltelement 10 ist als Kupplung ausgebildet, mit einen beispielhaft als Kupplungszylinder zur Aufnahme von Außenlamellen ausgebildeten Lamellenträger 11, der mit der Antriebswelle 7 verbunden ist. Dabei grenzt der Lamellenträger unmittelbar an das Kettentrieb-Antriebsrad 19 an. In einer anderen Ausgestaltung kann der Lamellenträger selbstverständlich auch als Innenlamellenträger ausgbildet sein.

Gemäß Fig. 2 ist - im Unterschied zu Fig. 1 - die Parksperrenverzahnung 33, in welche die Parksperrenklinke 34 zur Verblockung der Abtriebswelle des Automatgetriebes radial eingreifen kann, in dem Antriebsrad 19 des Kettentriebs integriert. Räumlich gesehen ist die Parksperrenverzahnung 33 in dem zylindischen Abschnitt 21 des Antriebsrades 19 angeordnet, axial neben dessen Kettenverzahnung, radial oberhalb der Lamellen 13 des Schaltelementes 10. Ein separates Parksperrenrad ist also nicht mehr erforderlich.

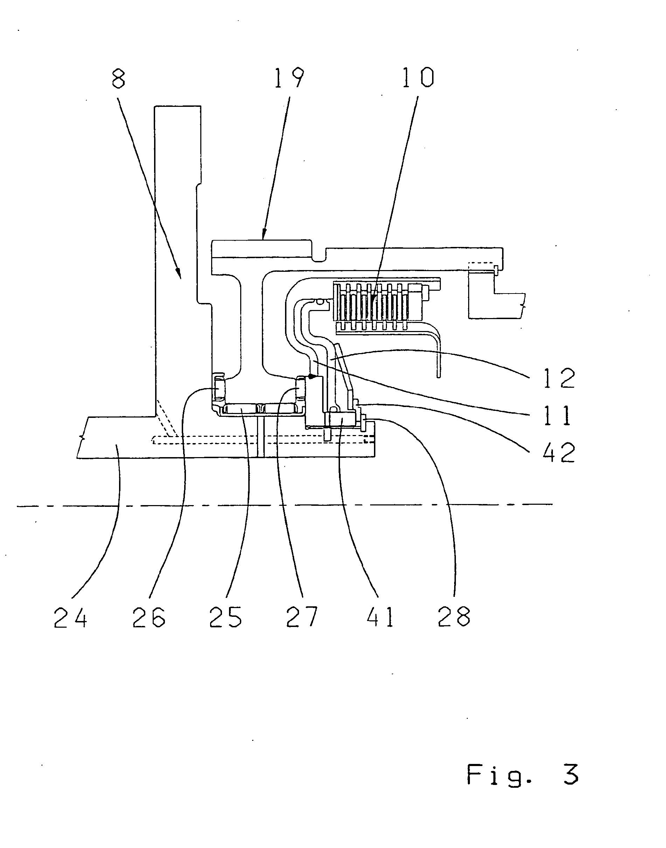

Anhand Fig. 3 wird nun eine dritte beispielhafte Konstruktion mit einem erfindungsgemäßen Kettentrieb-Antriebsrad erläutert, wobei das axial an das Kettentrieb-Antriebsrad 19 angrenzende Schaltelement 10 nunmehr als Bremse ausgebildet ist. Mit 8 ist unverändert die Leitradwelle bezeichnet, auf deren Lagerabschnitt 24 das Antriebsrad 19 des Kettentriebs gelagert ist. Der beispielhaft als zylinderförmiger Außenlamellenträger ausgebildete Lamellenträger 11 ist fest mit einer Nabe 41 verbunden. Diese Nabe 41 ist über ein entsprechend ausgebildetes Mitnahmeprofil formschlüssig mit der Leitradwelle 8 verbunden und damit gehäusefest. Die axiale Sicherung der Nabe auf der Leitradwelle 8 erfolgt über eine Stützscheibe 42 und den Sicherungsring 28, wobei der Sicherungsring 28 in eine korrespondierende Nut der Leitradwelle 8 eingreift. Die Stützscheibe 42 übernimmt zusätzlich die Funktion der axialen Abstützung eines im dargestellten Beispiel als Tellerfeder ausgeführten Rückstellelementes der Servoeinrichtung 12 der Bremse 10. Die Druckmittelzuführung zu der Servoeinrichtung 12 erfolgt über entsprechend ausgeführte Bohrungen und Kanäle der Leitradwelle 8.

Zur Lagerung des Kettentrieb-Antriebsrades 19 sind - ähnlich wie in Fig. 1 - ein als Nadellager ausgeführtes Radiallager 25 und zwei als Nadellager ausgeführte Axiallager 26, 27 vorgesehen. Das schaltelementseitige Axiallager 27 wird nunmehr über die Nabe 41, die Stützscheibe 42 und den Sicherungsring 28 abgestützt, wodurch das Kettentrieb-Antriebsrades 19 mit seinem Lagersystem gegenüber der Leitradwelle 8 axial fixiert wird.

### Bezugszeichen

- 1: Getriebegehäuse
- 2: Getriebegehäusewand
- 3: Wandlerglocke
- 4: Drehmomentwandler
- 5: Wandlerhals
- 6: Motorwelle
- 7: Antriebswelle des Automatgetriebes
- 8: Leitradwelle
- 9: Ölpumpe
- 10: Schaltelement
- 11: Lamellenträger
- 12: Servoeinrichtung des Schaltelementes
- 13: Lamellen des Schaltelementes
- 14: Planetenradsatz
- 15: Hohlrad des Planetenradsatzes
- 16: Mitnahmeverzahnung
- 17: Drehzahlgeberscheibe
- 18: Kettentrieb
- 19: Antriebsrad des Kettentriebs
- 20: scheibenförmiger Abschnitt des Antriebsrades
- 21: zylinderförmiger Abschnitt des Antriebsrades
- 22: Abtriebsrad des Kettentriebs
- 23: Kette des Kettentriebs
- 24: Lagerabschnitt der Leitradwelle
- 25: Radiallager des Antriebsrades
- 26: gehäusewandseitiges Axiallager des Kettentrieb-Antriebsades
- 27: schaltelementseitiges Axiallager des Kettentrieb-Antriebsrades
- 28: Sicherungsring
- 29: Spritzrohr des Kettentriebs
- 30: Schmierbohrungen des Kettentrieb-Antriebsrades
- 31: Abschirmblech
- 32: Parksperrenrad
- 33: Parksperrenverzahnung
- 34: Parksperrenklinke
- 35: Abtriebsplanetenradsatz
- 36: Sonnenrad des Abtriebsplanetenradsatzes
- 37: Hohlrad des Abtriebsplanetenradsatzes
- 38: Steg des Abtriebsplanetenradsatzes
- 39: Differential
- 40: Abtriebsflansch
- 41: Nabe
- 42: Stützscheibe

## Patentansprüche

1. Automatgetriebe, insbesondere für ein Kraftfahrzeug, mit einer Antriebswelle (7), mit einer zur Antriebswelle (7) nicht koaxialen Abtriebswelle, mit einem zur Antriebswelle (7) koaxialen Planetengetriebe, das mindestens einen Planetenradsatz (14) und mindestens ein Schaltelement (10) aufweist zur selektiven Übertragung einer Antriebsdrehzahl der Antriebswelle (7) auf ein Ausgangselement des Planetengetriebes, sowie mit einem in axialer Richtung unmittelbar an eine Getriebegehäusewand (2) des Automatgetriebes angrenzenden Kettentrieb (18) konstanter Übersetzung, dessen Antriebsrad (19) mit dem Ausgangselement des Planetengetriebes verbunden und koaxial zur Antriebswelle (7) angeordnet ist, und dessen Abtriebsrad (22) über eine Konstantübersetzung mit der Abtriebswelle wirkverbunden ist, **dadurch gekennzeichnet, daß** das Antriebsrad (19) des Kettentriebs (18) ein axial auf seiner der Getriebegehäusewand (2) abgewandten Seite unmittelbar angrenzendes Schaltelement (10) zumindest teilweise in axialer Richtung radial übergreift.

2. Automatgetriebe nach Anspruch 1, **dadurch gekennzeichnet, daß** das Antriebsrad (19) des Kettentriebs (18) in axialer Richtung unmittelbar an einen Lamellenträger (11) des Schaltelementes (10) angrenzt.

3. Automatgetriebe nach Anspruch 1 oder 2, **dadurch gekennzeichnet, daß** eine Servoeinrichtung (12) des an das Antriebsrad (19) des Kettentriebs (18) angrenzenden Schaltelementes (10) auf der dem Antriebsrad (19) des Kettentriebs (18) zugewandten Seite des Schaltelementes (10) angeordnet ist.

4. Automatgetriebe nach Anspruch 1, 2 oder 3, **dadurch gekennzeichnet, daß** das Antriebsrad (19) des Kettentriebs (18) Lamellen (13) des an das Antriebsrad (19) des Kettentriebs (18) angrenzenden Schaltelementes (10) zumindest teilweise in axialer Richtung radial übergreift.

5. Automatgetriebe nach einem der Ansprüche 1 bis 4, **dadurch gekennzeichnet, daß** das an das Antriebsrad (19) des Kettentriebs (18) angrenzende Schaltelement (10) als Kupplung ausgebildet ist.

6. Automatgetriebe nach einem der Ansprüche 1 bis 4, **dadurch gekennzeichnet, daß** das an das Antriebsrad (19) des Kettentriebs (18) angrenzende Schaltelement (10) als Bremse ausgebildet ist.

7. Automatgetriebe nach einem der Ansprüche 1 bis 6, **dadurch gekennzeichnet, daß** Antriebsrad (19) und Abtriebsrad (22) des Kettentriebs (18) im gleichen Getriebegehäuseelement zentriert sind.

8. Automatgetriebe nach einem der Ansprüche 1 bis 7, **dadurch gekennzeichnet, daß** das Antriebsrad (19) des Kettentriebs (18) auf einem sich axial in Richtung des Kettentriebs (18) erstreckenden Gehäusevorsprung der Getriebegehäusewand (2) gelagert ist.

9. Automatgetriebe nach einem der Ansprüche 1 bis 7, **dadurch gekennzeichnet, daß** das Antriebsrad (19) des Kettentriebs (18) auf einer fest mit einem Getriebegehäuse (1) verbundenen Welle gelagert ist.

10. Automatgetriebe nach Anspruch 8 oder 9, **dadurch gekennzeichnet, daß** das Antriebsrad (19) des Kettentriebs (18) auf dem sich axial in Richtung des Kettentriebs (18) erstreckenden Gehäusevorsprung der Getriebegehäusewand (2) bzw. auf der fest mit dem Getriebegehäuse (1) verbundenen Welle axial fixiert ist, insbesondere durch einen Sicherungsring (28).

11. Automatgetriebe nach Anspruch 8, 9 und 10, **dadurch gekennzeichnet, daß** die Lagerung des Antriebsrades (19) des Kettentriebs (18) als Nadellagerung oder Rollenlagerung ausgebildet ist, insbesondere mit einem Radiallader (25), einem getriebegehäusewandseitigem Axiallager (26) und einem schaltelementseitigen Axiallager (27).

12. Automatgetriebe nach Anspruch 11, **dadurch gekennzeichnet, daß** das Radiallader (25) auf dem auf dem sich axial in Richtung des Kettentriebs (18) erstreckenden Gehäusevorsprung der Getriebegehäusewand (2) bzw. auf der fest mit dem Getriebegehäuse (1) verbundenen Welle axial fixiert ist, insbesondere durch einen Sicherungsring (28), wobei sich das Antriebsrad (19) des Kettentriebs (18) in zur Getriebegehäusewand (2) entgegengesetzter Richtung axial an einem benachbarten Bauelement zum Getriebegehäuse (1) hin abstützt, insbesondere an einem flanschförmigen Abschnitt der Antriebswelle (7) bzw. an dem Lamellenträger (11) des an das Antriebsrad (19) des Kettentriebs (18) angrenzenden Schaltelementes (10).

13. Automatgetriebe nach einem der Ansprüche 1 bis 12, **dadurch gekennzeichnet, daß** die an den Kettentrieb (18) angrenzende Getriebegehäusewand (2) einem Antriebsmotor des Automatgetriebes zugewandt ist.

14. Automatgetriebe nach Anspruch 9 und 13, **dadurch gekennzeichnet, daß** die Welle, auf der das Antriebsrad (19) des Kettentriebs (18) gelagert ist, als Leitradwelle (8) für einen hydrodynamischen Drehmomentwandler (4) ausgebildet ist.

15. Automatgetriebe nach Anspruch 9, 13 und 14, **dadurch gekennzeichnet, daß** eine Ölpumpe (9) des Automatgetriebes in die Leitradwelle (8) integriert ist.

16. Automatgetriebe nach einem der Ansprüche 1 bis 15, **dadurch gekennzeichnet, daß** zur Schmierung des Kettentriebs ein Spritzrohr vorgesehen ist, über das Schmiermittel auf eine Innenseite einer Kette des Kettentriebs gespritzt wird.

17. Automatgetriebe nach einem der Ansprüche 1 bis 15, **dadurch gekennzeichnet, daß** zur Schmierung des Kettentriebs (18) mindestens eine Bohrung oder Blende direkt in der Welle, auf der das Antriebsrad (19) des Kettentriebs (18) gelagert ist bzw. in dem Gehäusevorsprung, auf dem das Antriebsrad (19) des Kettentriebs (18) gelagert ist, integriert ist, über die einer Kette (23) des Kettentriebs (18) Schmiermittel zugeführt wird.

18. Automatgetriebe nach einem der Ansprüche 1 bis 17, **dadurch gekennzeichnet, daß** das Antriebsrad (19) des Kettentriebs (18) zusätzlich eine Parksperrenverzahnung (33) aufweist, in die eine Parksperrenklinke (34) des Automatgetriebes zur Verriegelung der Abtriebswelle des Automatgetriebes eingreifen kann.

19. Automatgetriebe nach einem der Ansprüche 1 bis 17, **dadurch gekennzeichnet, daß** das Abtriebsrad (22) des Kettentriebs mit einem Parksperrenrad (32) verbunden ist, wobei das Parksperrenrad (32) eine Parksperrenverzahnung (33) aufweist, in die eine Parksperrenklinke (34) des Automatgetriebes zur Verriegelung der Abtriebswelle des Automatgetriebes eingreifen kann.

20. Automatgetriebe nach einem der Ansprüche 1 bis 17, **dadurch gekennzeichnet, daß** das Abtriebsrad (22) des Kettentriebs zusätzlich eine Parksperrenverzahnung (33) aufweist, in die eine Parksperrenklinke (34) des Automatgetriebes zur Verriegelung der Abtriebswelle des Automatgetriebes eingreifen kann.

21. Automatgetriebe nach einem der Ansprüche 1 bis 20, **dadurch gekennzeichnet, daß** ein Hohlrad (15) des Planetenradsatzes (14) das Ausgangselement des Planetengetriebes bildet.

22. Automatgetriebe nach einem der Ansprüche 1 bis 21, **dadurch gekennzeichnet, daß** das Abtriebsrad (22) des Kettentriebs mit einem Sonnenrad (36) eines Abtriebsplanetenradsatzes (35) verbunden ist, daß ein Hohlrad (37) des Abtriebsplanetenradsatzes (35) mit dem Getriebegehäuse (1) des Automatgetriebes verbunden ist, und daß die Abtriebswelle des Automatgetriebes mit einem Steg (38) des Abtriebsplanetenradsatzes (35) wirkverbunden ist.

## Claims

1. Automatic transmission, especially for a motor vehicle, equipped with a drive shaft (7), with an output shaft that does not run concentrically to the drive shaft (7), with a planetary gear that runs concentrically to the drive shaft (7) and features at least one planetary gear train (14) and at least one shifting component (10) for selective transmission of a driving speed of the drive shaft (7) to an output component of the planetary gear; and equipped with a constant-ratio drive chain (18) arranged in axial direction immediately adjacent to a transmission housing wall (2) of the automatic transmission, with its drive sprocket (19) being linked to the output component of the planetary gear and arranged concentrically to the drive shaft (7), and with its driven sprocket (22) being operatively linked to the output shaft via a constant gear, **characterized in that** the drive sprocket (19) of the drive chain (18) at least partially radially overlaps a shifting component (10) in axial direction, with the shifting component (10) being arranged axially immediately adjacent to its side not facing the transmission housing wall (2).

2. Automatic transmission according to claim 1, **characterized in that** the drive sprocket (19) of the drive chain (18) is arranged in axial direction immediately adjacent to a disk carrier (11) of the shifting component (10).

3. Automatic transmission according to claim 1 or 2, **characterized in that** a servo unit (12) of the shifting component (10), which is adjacent to the drive sprocket (19) of the drive chain (18), is arranged on the side of the shifting component (10) which faces the drive sprocket (19) of the drive chain (18).

4. Automatic transmission according to claim 1, 2, or 3, **characterized in that** the drive sprocket (19) of the drive chain (18) at least partially radially overlaps the disks (13) of the shifting component (10) in axial direction, with the shifting component being arranged immediately adjacent to the drive sprocket (19) of the drive chain (18).

5. Automatic transmission according to one of the claims 1 through 4, **characterized in that** the shifting component (10), which is adjacent to the drive sprocket (19) of the chain drive (18), is designed as a clutch.

6. Automatic transmission according to one of the claims 1 through 4, **characterized in that** the shifting component (10), which is adjacent to the drive sprocket (19) of the drive chain (18), is designed as a brake.

7. Automatic transmission according to one of the claims 1 through 6, **characterized in that** the drive sprocket (19) and the driven sprocket (22) of the drive chain (18) are centered in the same transmission housing element.

8. Automatic transmission according to one of the claims 1 through 7, **characterized in that** the drive sprocket (19) of the drive chain (18) is supported on a projection of the transmission housing wall (2), with the projection extending axially towards the chain drive (18).

9. Automatic transmission according to one of the claims 1 through 7, **characterized in that** the drive sprocket (19) of the drive chain (18) is supported on a shaft which is firmly connected to a transmission housing (1).

10. Automatic transmission according to claim 8 or 9, **characterized in that** the drive sprocket (19) of the drive chain (18) is axially fixed, in particular by a circlip (28), to the housing projection of the transmission housing wall (2), with the projection extending axially towards the chain drive (18), or to the shaft which is firmly connected to the transmission housing (1).

11. Automatic transmission according to claims 8, 9, and 10, **characterized in that** the suspension of the drive sprocket (19) of the chain drive (18) is designed as a needle or a roller bearing, in particular with a radial bearing (25), an axial bearing (26) mounted to the transmission housing wall, and an axial bearing (27) mounted to the shifting component.

12. Automatic transmission according to claim 11, **characterized in that** the radial bearing (25) is axially fixed, in particular by a circlip (28), to the housing projection of the transmission housing wall (2), with the projection extending axially towards the chain drive (18), or to the shaft, which is firmly connected to the transmission housing (1), with the drive sprocket (19) of the chain drive (18) being axially supported on a neighboring component in opposite direction to the transmission housing wall (2) and towards the transmission housing (1); in particular on a flange-shaped section of the drive shaft (7) or on the disk carrier (11) of the shifting component (10), which is adjacent to the drive sprocket (19) of the chain drive (18).

13. Automatic transmission according to one of the claims 1 through 12, **characterized in that** the transmission housing wall (2), which is adjacent to the chain drive (18), faces a driving motor of the automatic transmission.

14. Automatic transmission according to claims 9 and 13, **characterized in that** the shaft on which the drive sprocket (19) of the chain drive (18) is supported is designed as a stator shaft (8) for a hydrodynamic torque converter (4).

15. Automatic transmission according to claims 9, 13, and 14, **characterized in that** an oil pump (9) of the automatic transmission is integrated within the stator shaft (8).

16. Automatic transmission according to one of the claims 1 through 15, **characterized in that** an injection tube is provided for lubrication of the chain drive, with the lubricant being splashed onto an inner side of a chain of the chain drive.

17. Automatic transmission according to one of the claims 1 through 15, **characterized in that** for lubrication of the chain drive (18) there is at least one bore or orifice in the shaft on which the drive sprocket (19) of the drive chain (18) is supported, or in the housing projection on which the drive sprocket (19) of the chain drive (18) is supported, through which lubricant is supplied to a chain (23) of the chain drive (18).

18. Automatic transmission according to one of the claims 1 through 17, **characterized in that** the drive sprocket (19) of the drive chain (18) also features a parking lock gearing (33) with which a parking pawl (34) of the automatic transmission can engage in order to lock the output shaft of the automatic transmission.

19. Automatic transmission according to one of the claims 1 through 17, **characterized in that** the driven sprocket (22) of the drive chain is connected to a parking lock gear (32), with the parking lock gear (32) featuring a parking lock gearing (33) with which a parking pawl (34) of the automatic transmission can engage in order to lock the output shaft of the automatic transmission.

20. Automatic transmission according to one of the claims 1 through 17, **characterized in that** the driven sprocket (22) of the chain drive also features a parking lock gearing (33) with which a parking pawl (34) of the automatic transmission can engage in order to lock the output shaft of the automatic transmission.

21. Automatic transmission according to one of the claims 1 through 20, **characterized in that** an internal gear (15) of the planetary gear train (14) constitutes the basic element of the planetary transmission.

22. Automatic transmission according to one of the claims 1 through 21, **characterized in that** the driven sprocket (22) of the chain drive is connected to a center gear (36) of an output planetary gear train (35), that an internal gear (37) of the output planetary gear train (35) is connected to the transmission housing (1) of the automatic transmission, and that the output shaft of the automatic transmission is operationally connected to a web (38) of the output planetary gear train (35)

## Revendications

1. Boîte de vitesses automatique, en particulier pour un véhicule automobile, comprenant un arbre d'entrée (7), un arbre de sortie qui n'est pas coaxial à l'arbre d'entrée (7), un mécanisme épicycloïdal non coaxial à l'arbre d'entrée (7), qui comporte au moins un train épicycloïdal (14) et au moins un élément de commande (10) servant à la transmission sélective d'une vitesse de rotation d'entrée de l'arbre d'entrée (7) à un élément de sortie du mécanisme épicycloïdal, ainsi qu'une transmission à chaîne (18) à rapport de transmission constant, immédiatement adjacente, dans la direction axiale, à une paroi (2) du carter de la boîte de vitesses automatique, dont la roue d'entrée (19) est reliée à l'élément de sortie du mécanisme épicycloïdal et est disposée coaxialement à l'arbre d'entrée (7), et dont la roue de sortie (22) est reliée fonctionnellement à l'arbre de sortie avec un rapport de transmission constant, **caractérisée en ce que** la roue d'entrée (19) de la transmission à chaîne (18) recouvre radialement, du moins en partie dans la direction axiale, un élément de commande (10) qui y est immédiatement adjacent sur son côté éloigné de la paroi (2) du carter de la boîte de vitesses.

2. Boîte de vitesses automatique selon la revendication 1, **caractérisée en ce que** la roue d'entrée (19) de la transmission à chaîne (18) est immédiatement adjacente à un support de disques (11) de l'élément de commande (10) dans la direction axiale.

3. Boîte de vitesses automatique selon la revendication 1 ou 2, **caractérisée en ce qu**'un servodispositif (12) de l'élément de commande (10) adjacent à la roue d'entrée (19) de la transmission à chaîne (18) est disposé sur le côté de l'élément de commande (10) qui est dirigé vers la roue d'entrée (19) de la transmission à chaîne (18).

4. Boîte de vitesses automatique selon la revendication 1, 2 ou 3, **caractérisée en ce que** la roue d'entrée (19) de la transmission à chaîne (18) recouvre radialement les disques (13) de l'élément de commande (10) adjacent à la roue d'entrée (19) de la transmission à chaîne (18), au moins en partie dans la direction axiale.

5. Boîte de vitesses automatique selon l'une des revendications 1 à 4, **caractérisée en ce que** l'élément de commande (10), qui est adjacent à la roue d'entrée (19) de la transmission à chaîne (18), est constitué par un embrayage.

6. Boîte de vitesses automatique selon l'une des revendications 1 à 4, **caractérisée en ce que** l'élément de commande (10), qui est adjacent à la roue d'entrée (19) de la transmission à chaîne (18), est constitué par un frein.

7. Boîte de vitesses automatique selon l'une des revendications 1 à 6, **caractérisée en ce que** la roue d'entrée (19) et la roue de sortie (22) de la transmission à chaîne (18) sont centrées dans le même élément du carter de la boîte de vitesses.

8. Boîte de vitesses automatique selon l'une des revendications 1 à 7, **caractérisée en ce que** la roue d'entrée (19) de la transmission à chaîne (18) est montée rotative sur une saillie de la paroi (2) du carter de la boîte de vitesses qui s'étend axialement en direction de la transmission à chaîne (18).

9. Boîte de vitesses automatique selon l'une des revendications 1 à 7, **caractérisée en ce que** la roue d'entrée (19) de la transmission à chaîne (18) est montée rotative sur un arbre relié rigidement au carter (1) de la boîte de vitesses.

10. Boîte de vitesses automatique selon la revendication 8 ou 9, **caractérisée en ce que** la roue d'entrée (19) de la transmission à chaîne (18) est arrêtée axialement sur la saillie de la paroi (2) du carter de la boîte de vitesses qui s'étend axialement en direction de la transmission à chaîne (18) ou sur l'arbre relié rigidement au carter (1) de la boîte de vitesses, en particulier par une bague d'arrêt (28).

11. Boîte de vitesses automatique selon la revendication 8, 9 et 10, **caractérisée en ce que** le montage rotatif de la roue d'entrée (19) de la transmission à chaîne (18) est constitué par un palier à aiguilles ou un palier à rouleaux, comprenant en particulier un palier radial (25), un palier axial (26) côté paroi du carter de la boîte de vitesses, et un palier axial (27) côté élément de commande.

12. Boîte de vitesses automatique selon la revendication 11, **caractérisée en ce que** le palier radial (25) est arrêté axialement sur la saillie de la paroi (2) du carter de la boîte de vitesses qui s'étend axialement en direction de la transmission à chaîne (18) ou sur l'arbre relié rigidement au carter (1) de la boîte de vitesses, en particulier par une bague d'arrêt (28), la roue d'entrée (19) de la transmission à chaîne (18) étant appuyée axialement dans la direction opposée à la paroi (2) du carter de la boîte de vitesses, contre un élément de construction adjacent appartenant au carter (1) de la boîte de vitesses, en particulier contre un segment en forme de collerette de l'arbre d'entrée (7) ou contre le support de disques (11) de l'élément de commande (10) adjacent à la roue d'entrée (19) de la transmission à chaîne (18).

13. Boîte de vitesses automatique selon l'une des revendications 1 à 12, **caractérisée en ce que** la paroi (2) du carter de la boîte de vitesses qui est adjacente à la transmission à chaîne (18) est dirigée vers un moteur d'entraînement de la boîte de vitesses automatique.

14. Boîte de vitesses automatique selon la revendication 9 et 13, **caractérisée en ce que** l'arbre sur lequel la roue d'entrée (19) de la transmission à chaîne (18) est montée rotative est constitué par un arbre de stator (8) d'un convertisseur de couple hydrodynamique (4).

15. Boîte de vitesses automatique selon la revendication 9, 13 et 14, **caractérisée en ce qu'**une pompe à huile (9) de la boîte de vitesses automatique est intégrée dans l'arbre de stator (8).

16. Boîte de vitesses automatique selon l'une des revendications 1 à 15, **caractérisée en ce que**, pour la lubrification de la transmission à chaîne, il est prévu un tube gicleur par l'intermédiaire duquel un lubriflant est pulvérisé sur un côté intérieur d'une chaîne de la transmission à chaîne.

17. Boîte de vitesses automatique selon l'une des revendications 1 à 15, **caractérisée en ce que**, pour la lubrification de la transmission à chaîne (18), au moins un perçage ou un diaphragme par l'intermédiaire duquel du lubrifisnt est acheminé à une chaîne (23) de la transmission à chaîne (18) est intégré directement dans l'arbre sur lequel la roue d'entrée (19) de la transmission à chaîne (18) est monté rotatif ou dans la saillie du carter sur laquelle la roue d'entrée (19) de la transmission à chaîne (18) est montée rotative.

18. Boîte de vitesses automatique selon l'une des revendications 1 à 17, **caractérisée en ce que** la roue d'entrée (19) de la transmission à chaîne (18) présente en outre une denture (33) de frein de stationnement dans laquelle un cliquet de frein de stationnement (34) de la boîte de vitesses automatique peut s'engager pour verrouiller l'arbre de sortie de la boîte de vitesses automatique.

19. Boîte de vitesses automatique selon l'une des revendications 1 à 17, **caractérisée en ce que** la roue de sortie (22) de la transmission à chaîne est reliée à une roue de frein de stationnement (32), la roue de frein de stationnement (32) comportant une denture de frein de stationnement (33) dans laquelle un cliquet de frein de stationnement (34) de la boîte de vitesses automatique peut s'engager pour verrouiller l'arbre de sortie de la boîte de vitesses automatique.

20. Boîte de vitesses automatique selon l'une des revendications 1 à 17, **caractérisée en ce que** la roue de sortie (22) de la transmission à chaîne présente en outre une denture de frein de stationnement (33) dans laquelle un cliquet de frein de stationnement (34) de la boîte de vitesses automatique peut s'engager pour verrouiller l'arbre de sortie de la boîte de vitesses automatique.

21. Boîte de vitesses automatique selon l'une des revendications 1 à 20, **caractérisée en ce qu'**une couronne à denture intérieure (15) du train épicycloïdal (14) forme l'élément de sortie du mécanisme épicycloïdal.

22. Boîte de vitesses automatique selon l'une des revendications 1 à 21, **caractérisée en ce que** la roue de sortie (22) de la transmission à chaîne est reliée à une roue planétaire (36) d'un train épicycloïdal de sortie (35), **en ce qu'**une couronne à denture intérieure (37) du train épicycloïdal de sortie (35) est reliée au carter (1) de la boîte de vitesses automatique et **en ce que** l'arbre de sortie de la boîte de vitesses automatique est relié fonctionnellement à un porte-satellites (38) du train épicycloïdal de sortie (35).
